# EUROPÄISCHE PATENTSCHRIFT

(11) **EP 0 804 788 B1**
(45) Veröffentlichungstag und Bekanntmachung des Hinweises auf die Patenterteilung: **12.02.2003**
(21) Anmeldenummer: 95941006.9
(22) Anmeldetag: 23.11.1995
(51) Int. Cl.: G10L 15/14, G10L 15/18

(54) **VERFAHREN ZUR SPRACHERKENNUNG**
SPEECH RECOGNITION PROCESS
PROCEDE DE RECONNAISSANCE VOCALE

(30) Priorität: 20.01.1995 DE 19501599
(43) Veröffentlichungstag der Anmeldung: 05.11.1997
(73) Patentinhaber: DaimlerChrysler AG, 70567 Stuttgart (DE)
(72) Erfinder: CLASS, Fritz, D-72587 Römerstein (DE); KALTENMEIER, Alfred, D-89075 Ulm (DE); KILIAN, Ute, D-72587 Römerstein (DE); REGEL-BRIETZMANN, Peter, D-89073 Ulm (DE)
(74) Vertreter: Grünecker, Kinkeldey, Stockmair & Schwanhäusser Anwaltssozietät
(86) Internationale Anmeldenummer: EP9504626
(87) Internationale Veröffentlichungsnummer: WO96022593

(56) Entgegenhaltungen:
- EP-A- 0 435 580
- TRENDS IN SPEECH RECOGNITION, 1980 SPEECH COMMUNICATIONS RESEARCH LABORATORY AND UNIVERSITY OF SOUTHERN CALIFORNIA, Seiten 340-360, BRUCE LOWERRE 'the harpy speech understanding system'
- COMPUTER SPEECH & LANGUAGE, Bd. 8, Nr. 1, 1994 LONDON, GB, Seiten 1-38, XP 000452242 H.NEY, U.ESSEN, R.KNESER 'on structuring probabilistic dependencies in stochastic language modelling'
- COMPUTER SPEECH AND LANGUAGE, Bd. 3, Nr. 3, 1.Juli 1989 Seiten 277-299, XP 000080944 NAKAGAWA S -I 'SPEAKER-INDEPENDENT CONTINUOUS-SPEECH RECOGNITION BY PHONEME-BASED WORD SPOTTING AND TIME-SYNCHRONOUS CONTEXT-FREE PARSING'

## Beschreibung

Die Erfindung betrifft ein Verfahren zur Spracherkennung nach dem Oberbegriff des Patentanspruchs 1.

Bei der Erkennung gebundener Sprache, die eine beliebige Kombination aller Wörter zuläßt, steigt die Fehlerrate im Vergleich zur Einzelworterkennung erheblich an. Um dem entgegenzuwirken, kann beispielsweise Wissen über zulässige Wortfolgen in sogenannten Sprachmodellen gespeichert und bei der Erkennung verwertet werden. Die Anzahl zulässiger Sätze kann dadurch erheblich eingeschränkt werden.

Sprachmodelle werden gebräuchlich als N-gram Modelle definiert, wobei N als Tiefe des Modells bezeichnet wird und die Anzahl aufeinanderfolgender Wörter innerhalb einer Wortfolge angibt, die bei der aktuellen Bewertung einer Wortfolgenhypothese berücksichtigt werden. Wegen des mit zunehmenden N schnell steigenden Aufwands im Erkennungsprozeß wird bevorzugt das mit N = 2 besonders einfache Bigram-Modell angewandt, welches nur Zweierkombinationen von Wörtern berücksichtigt. Die Sprachmodelle können weiter vereinfacht werden durch die Zusammenfassung von Wörtern, die im gleichen Kontakt auftreten, ohne aber unbedingt dieselbe Bedeutung haben zu müssen, zu Wortgruppen (z.B. alle Wochentage). Statt einzelner Wortübergänge kann in den Sprachmodellen der Übergang von einer Wortgruppe zur anderen betrachtet werden.

In Informatik Forsch. Entw. (1992) 7, S. 83 -97 und in Computer Speech and Language, Bd. 8, Nr. 1, 1994, Seiten 1 -38 , sind Grundprobleme der automatischen Erkennung fließender Sprache eingehend behandelt und Lösungsansätze aus der Sicht der statistischen Entscheidungstheorie beschrieben. Im Vordergrund steht die stochastische Modellierung von Wissensquellen für Akustik und Linguistik z.B. in Form von Phonem-Modellen, Aussprache-Lexikon und Sprachmodell.

Aus "The HARPY Peach Understanding System" in Readings in Speech recognition, 1990, Morgan Kaufmann Publishers Inc. und Trends in Speech Recognition, 1980,Speech Communications Research Laboratory and University of Southern California, Seiten 340-360 sind ein Spracherkennungssystem mit stark eingeschränkter Anzahl zulässiger Sätze bekannt. Die die Zulässigkeit bestimmenden syntaktischen semantischen Einschränkungen können in Grammatik-Gleichungen formuliert und als Graph dargestellt werden. Um von der vollständigen, aber mit großem Verarbeitungsaufwand verbundenen Grammatik-Difinition zu einem kompakten Sprachmodell mit vertretbarem Verarbeitungsaufwand zu gelangen, werden einige Vereinfachungen eingeführt.

Solche Vereinfachungen sind aber teilweise nur möglich, wenn für das Sprachmodell in Kauf genommen wird, daß in der ursprünglichen Grammatik-Definition unzulässige Wortfolgen wieder als zulässig erscheinen. Bei dem HARPY-System werden schließlich die Wörter durch ihre phonetischen Definitionen ersetzt und so ein phonetisches Modell für einen Ganzsatzerkenner geschaffen.

Aufgabe der vorliegenden Erfindung ist es, ein Verfahren zur Spracherkennung anzugeben, daß bei geringem Verarbeitungsaufwand eine hohe Erkennungsleistung aufweist.

Die Erfindung ist im Patentanspruch 1 beschrieben. Die Unteransprüche enthalten vorteilhafte Ausgestaltungen und Weiterbildungen der Erfindung.

Die Erfindung ermöglicht durch die unterschiedbare Kennzeichnung mehrfach in der Grammatik der Menge der zulässigen Sätze auftretender Wörter im Sprachmodell die zulässigen Vorläufer eines bestimmten Wortes an bestimmter Satzposition implizit vollständig zu erfassen, ohne daß explizit alle zulässigen vorangegangenen Übergänge zu diesem Wort gespeichert werden müssen. Dies entspricht einem N-gram-Sprachmodell mit von der jeweiligen Wortposition abhängigem variablem N. Die unterscheidbare Kennzeichnung mehrfach auftretender gleicher Wörter sei im folgenden als Indizieren der Wörter bezeichnet.

Vorzugsweise kann die Syntaxinformation in einem Bigram-Sprachmodell integriert werden. Der Erkennungsprozeß, der vorzugsweise ein HMM(Hidden Markov Model)-Erkennungsprozeß ist, kann in gleicher Weise ablaufen wie ohne die Integration der Syntax in das Sprachmodell.

Eine wesentliche Erweiterung eines für die akustische Worterkennung herangezogenen gebräuchlichen Aussprachelexikons ist nicht notwendig, da allen im Sprachmodell unterschiedlich indizierten Exemplaren des gleichen Wortes ein und derselbe Lexikoneintrag zugeordnet werden kann. Die Bigram-Syntaxinformation kann dann vorteilhafterweise dadurch berücksichtigt werden, daß dem aus einer Folge von Wortuntereinheiten bestehenden Lexikoneintrag entsprechend dem mehrfachen Auftreten im Sprachmodell mehrere Wortendeknoten zugewiesen werden.

Bei der Spracherkennung nach dem erfindungsgemäßen Verfahren werden eingegebene Sprachsignale immer syntaktisch richtigen Sätzen zugewiesen. Vorzugsweise ist daher die Möglichkeit vorgesehen, daß das Erkennungssystem eine Eingabe zurückweist. Vorteilhaft hierfür ist die Zuweisung eines Wahrscheinlichkeitswerts an erkannte Sätze und Vergleich der Wahrscheinlichkeitswerte mit einer vorgebbaren Rückweisungsschwelle. Die globale Satzwahrscheinlichkeit, normiert auf die Satzlänge, bildet ein gut geeignetes Maß für die Zuweisung der Wahrscheinlichkeitswerte. In die globale Satzwahrscheinlichkeit werden insbesondere die Wahrscheinlichkeiten bei der akustischen Erkennung der einzelnen Wörter einbezogen. Berücksichtigt werden können darüberhinaus auch Wahrscheinlichkeiten aus statistischen Verteilungen von Wortfolgen im Sprachmodell oder Häufigkeiten von Sätzen in Trainingsmengen.

Die Wahrscheinlichkeitsbewertung wird vorzugsweise auch während des laufenden Erkennungsprozesses durchgeführt und als Grundlage für ein Ausblenden von Pfaden mit zu geringer Wahrscheinlichkeit herangezogen.

Die Erfindung ist nachfolgend unter Bezugnahme auf die Abbildungen noch eingehend veranschaulicht.

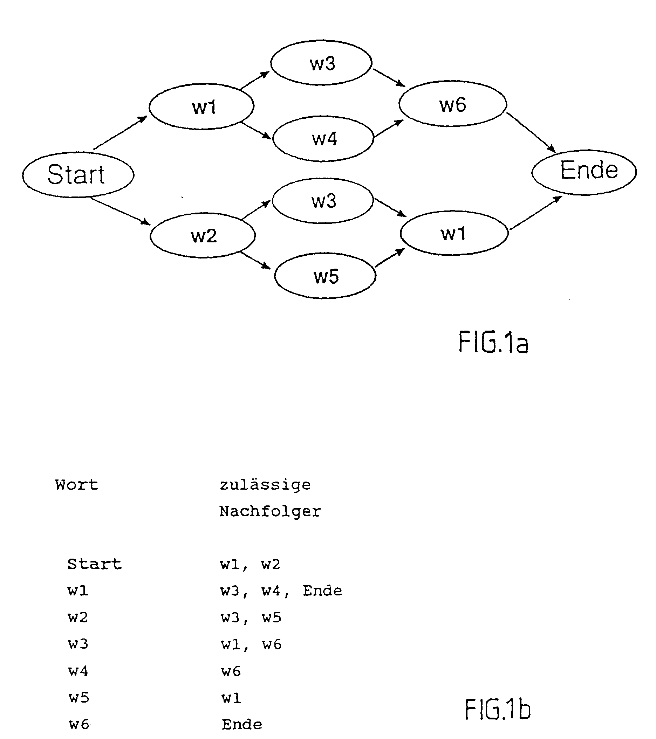

Die FIG. 1a zeigt ein einfaches Beispiel eines Netzwerk-Graphen für ein Sprachmodell, welches aus den Wörtern w1 bis w6 zwischen dem Satzanfang Start und dem Satzende Ende die Wortfolgen w1w3w6, w1w4w6, w2w3w1, w2w5w1 als Sätze zuläßt. Die aus dem Graphen ableitbare Bigram-Information über die zulässigen Nachfolger zu jedem Wort w1 bis w6 ist als Tabelle in FIG. 1b angegeben. In einem auf diese Bigram-Information gestützten Sprachmodell erscheinen aber nicht zulässige Sätze wie z.B. wlw3wlw4w6 als zulässig.

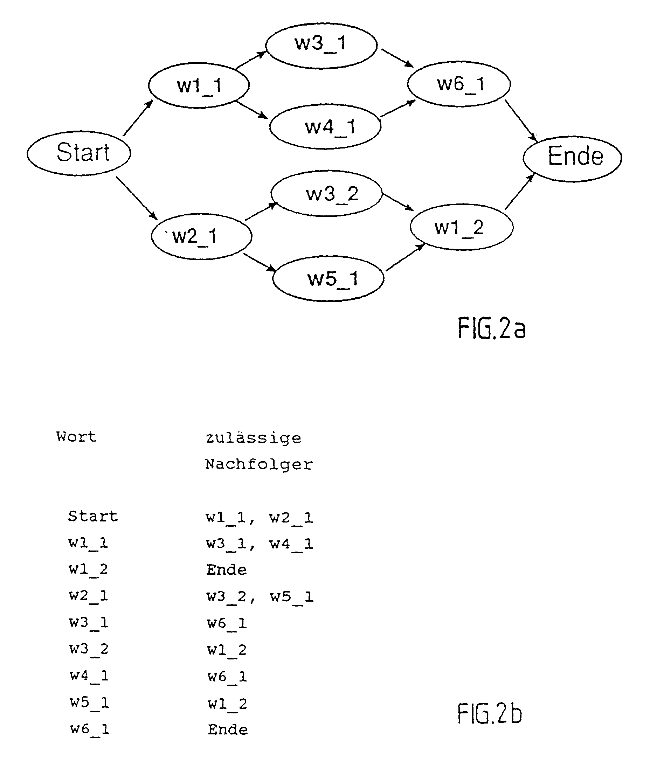

Die demgegenüber wesentliche Änderung gemäß der Erfindung ist aus FIG. 2a und FIG. 2b ersichtlich. Die durch den Netzwerk-Graphen nach FIG. 1a festgelegte Menge der zulässigen Sätze enthält die Wörter w1 und w3 jeweils in zwei syntaktisch verschiedenen Positionen. Diese mehrfach vorkommenden Wörter sind nunmehr in FIG. 2a als voneinander unterscheidbare Exemplare durch Indizierung gekennzeichnet, wobei der Index _m mit m als ganzzahliger Laufzahl innerhalb des Graphen in an sich beliebiger Reihenfolge auf die Mehrfach-Exemplare eines Wortes vergeben werden kann. Wichtig ist, daß durch die Indizierung Wörter in syntaktischen Positionen, die nicht ohne Änderung der Zuläsigkeit aller Sätze vertauscht werden können, eindeutig gekennzeichnet werden. Zur Vereinheitlichung der Notation sind auch alle einmalig auftretenden Wörter mit einem Index _1 versehen. Die Bigram-Informationstabelle in FIG. 2b zu dem Graphen von FIG. 2a zeigt sich gegenüber der Tabelle in FIG. 1b um die Mehrfach-Exemplare erweitert, gibt aber nunmehr eine dem Graphen exakt gleiche Vorschrift über alle zulässigen Sätze wieder und weist einen geringeren mittleren Verzweigungsgrad auf.

Da die phonetischen Repräsentanten für alle Mehrfach-Exemplare desselben Wortes identisch sind, braucht das diese phonetischen Repräsentanten enthaltende Aussprache-Lexikon nicht im gleichen Maße erweitert werden. Es kann für alle Mehrfach-Exemplare desselben Wortes auf denselben Lexikon-Eintrag zurückgegriffen werden, wobei lediglich am Wortende wieder eine eindeutige Zuordnung zu den jeweils zulässigen Nachfolgern ermöglicht werden muß. Hierfür können vorteilhafterweise zu einem betroffenen Lexikon-Eintrag mehrere Wortendeknoten vorgesehen sein, welche die unterschiedlichen Syntax-Einschränkungen der durch Indizierung unterscheidbaren Wortpositionen berücksichtigen.

Bei der vorteilhaften Zusammenfassung von Wörtern zu Wortgruppen treten an die Stelle der Wörter w1_1 bis w6_1 im Netzwerk-Graph und in den Bigram-Tabellen jeweils Wortgruppen, die unterscheidbar indiziert sind. Die Mitglieder einer Wortgruppe sind entsprechend durch Indizieren eindeutig zu kennzeichnen.

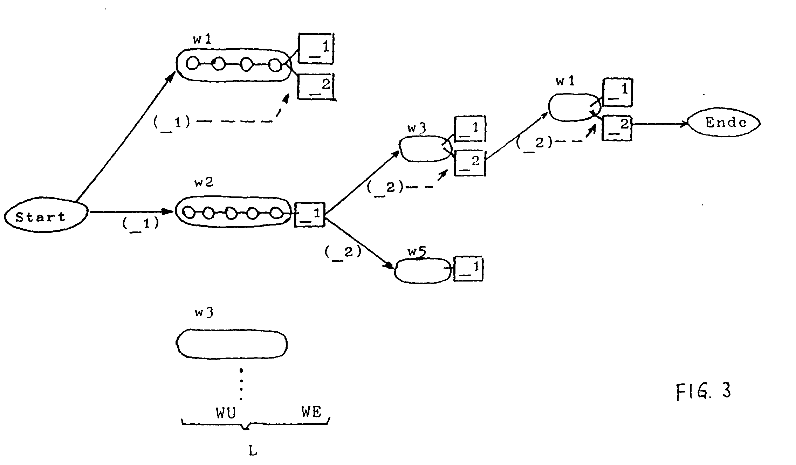

FIG. 3 veranschaulicht die Abfolge des Erkennungsprozesses für eine im Beispiel nach FIG. 2a, 2b als Satz zulässige Wortfolge w2w3wl. Ausgehend von einem Satzanfangsknoten Start sind als erstes Wort nur w1 oder w2 zulässig. Der Beginn eines Sprachsignals wird daher auf mögliche Übereinstimmung mit w1 und/oder w2 überprüft. Hierzu wird auf die in einem Aussprachelexikon L abgelegten sprachlichen Charakteristika dieser beiden Wörter zurückgegriffen. Gebräuchlicherweise enthalten die Lexikoneinträge zu jedem Wort mehrere Wortuntereinheiten mit Vorschriften über deren zulässige Aufeinanderfolge. Die Vorgehensweise bei der Worterkennung kann beispielsweise wie bei dem erwähnten Harpy-System durch Durchlaufen einer baumartigen Suchpfadstruktur erfolgen mit fortlaufender Bewertung der einzelnen untersuchten Pfade und Ausblenden von niedrig bewerteten Pfaden.

In FIG. 3 ist für die Suchstruktur vereinfacht eine linare Kette mehrerer Wortuntereinheiten WU (Kreise) eingetragen.

Die Lexikoneinträge umfassen wie bereits erwähnt auch Wortendeknoten WE (Quadrate in FIG. 3), wobei für mehrfach an verschiedener Position im Graphen der FIG. 2a auftretende gleiche Wörter entsprechend deren Indizierung ein Lexikoneintrag mehrere Wortendeknoten aufweist, die jeweils einem der indizierten Exemplare desselben Worts durch den übereinstimmenden Index zuordenbar sind und die zulässigen Nachfolgewörter festlegen. Der Index eines Wortes wird beim Zugriff auf das Lexikon in der Weise berücksichtigt, daß mittels des Index die richtige Auswahl unter dem ggf. mehreren Wortendeknoten getroffen wird.

Bei dem in FIG. 3 skizzierten Beispiel ist angenommen, daß das Sprachsignal keine ausreichende phonetische Übereinstimmung mit dem Lexikoneintrag zum Wort w1 zeigt und dieser Teil des Suchpfads abgebrochen wird, noch bevor das Wortende von w1 erreicht ist. Hingegen zeige das Sprachsignal eine gute Übereinstimmung mit dem Lexikoneintrag zum Wort w2, so daß dieser Suchpfad weiterverfolgt wird. Da w2 im Sprachmodell nur an einer Position auftritt, existiert nur ein Wortendeknoten, von dem aus sich die Suche verzweigt auf die Überprüfung der Wörter w3 und w5 als zulässige Nachfolger, die erfindungsgemäß durch Indizieren als w3_2 und w5_1 eindeutig gemacht sind. Für w5 sei wieder mangelnde phonetische Übereinstimmung mit dem fortgesetzten Sprachsignal und Abbruch dieses Teils des Suchpfads angenommen, wogegen der Suchpfad über w3 bis zur Verzweigung auf die beiden Wortendeknoten mit Indizes _1 und _2 weiterverfolgt werde. Mittels des Index _2 aus dem indizierten Zugriff auf den Lexikoneintrag w3 wird der gleich indizierte Wortendeknoten für die Weiterführung des Suchpfads ausgewählt, woraus sich w1_2 als einziges zulässiges Nachfolgewort ergibt. Dessen Lexikoneintrag wird wieder mit dem fortgesetzten Sprachsignal verglichen. Bei ausreichender Übereinstimmung wird der Suchpfad über den mit _2 indizierten Wortendeknoten zum Satzende weiter geführt.

Im Realfall werden vorzugsweise mehrere Suchpfade vollständig bis zum Satzende verfolgt und danach einer weiteren Auswahl unterzogen, bei der beispielsweise durch Schwellwertsetzung und/oder Vergleich der globalen Satzwahrscheinlichkeiten oder anderer an sich bekannter Bewertungsgrößen einer der erkannten Sätze als bester Satz ausgewählt und weiter verarbeitet wird, z.B. als auszuführendes Kommando.

## Patentansprüche

1. Verfahren zur Spracherkennung von aus mehreren Wörtern eines gegebenen Wortschatzes zusammengesetzten Sätzen, bei welchem ein begrenzte Menge zulässiger Sätze vorgegeben wird, wobei die zulässigen Sätze eine Syntax und die Wörter des gegebenen Wortschatzes syntaktische Positionen in den zulässigen Sätzen haben, wobei
- ein N-gram Sprachmodell verwendet wird, in welches die Syntax der zulässigen Sätze integriert ist, wobei Wörter, die in den zulässigen Sätzen mehrfach in verschiedenen syntaktischen Positionen vorkommen, in dem Sprachmodell voneinander durch Indizierung der Wörter unterschieden werden, wobei die Indizierung mit den für die jeweilige Position gültigen Einschränkungen erfolgt, und
- während des laufenden Erkennungsprozesses nur die Übereinstimmung eines aktuellen Sprachsignals mit den zulässigen N-gram Wortfolgen geprüft wird, die durch Berücksichtigung der syntaktischen Einschränkungen mittels der Indizierung der Wörter eindeutig sind.

2. Verfahren nach Anspruch 1, **gekennzeichnet durch** einen HMM-Erkennungsprozeß.

3. Verfahren nach Anspruch 1 oder 2, **dadurch gekennzeichnet, daß** als Sprachmodell ein Bigram-Modell vorgegeben wird.

4. Verfahren nach einem der Ansprüche 1 bis 3, **dadurch gekennzeichnet, daß** den im Sprachmodell mehrfach vorgegebenen Exemplaren eines Wortes derselbe Eintrag in einem Aussprachelexikon zugewiesen wird, der durch eine Auswahl von Wortendeknoten eindeutig einem der mehreren Exemplare zugeordnet wird.

5. Verfahren nach einem der Ansprüche 1 bis 4, **dadurch gekennzeichnet, daß** den bei dem Erkennungsprozeß überprüften zulässigen Wortfolgen Wahrscheinlichkeitswerte zugewiesen und diese einem Schwellwertvergleich unterzogen werden.

6. Verfahren nach Anspruch 5, **dadurch gekennzeichnet, daß** als Wahrscheinlichkeitswert die globale Wortfolgenwahrscheinlichkeit, normiert auf die aktuelle Wortfolgenlänge ermittelt wird.

## Claims

1. A speech recognition process for recognising clauses composed of several words from a defined vocabulary wherein a limited number of permissible clauses is predefined and wherein the permissible clauses have a syntax and the words in the predefined vocabulary have syntactical positions in the permissible clauses, wherein
- an N-gram speech model is used in which the syntax of the permissible clauses is integrated, wherein words, which appear several times in the permissible clauses in different syntactical positions, are distinguished from one another in the speech model by indexing the words, wherein the indexing process is effected with the restrictions applying to the respective position, and
- a check is made during the running recognition process only for conformity of an actual speech signal with the permissible N-gram word sequences which are unambiguous by taking into account the syntactic restrictions by means of the indexing of the words.

2. A process in accordance with Claim 1, **characterised by** an HMM recognition process.

3. A process in accordance with Claim 1 or 2, **characterised in that** the speech model is in the form of a bi-gram model.

4. A process in accordance with any of the Claims 1 to 3, **characterised in that** the same entry in a pronunciation lexicon is allocated to the examples of a word occurring several times in the speech model, which entry is associated unambiguously with one of the several examples by a selection of word-ending nodes.

5. A process in accordance with any of the Claims 1 to 4, **characterised in that** probability values are allocated to the permissible word sequences checked during the recognition process, and these are subjected to a threshold value comparison.

6. A process in accordance with Claim 5, **characterised in that** the probability value is determined in the form of the global word sequence probability normalised to the actual length of the word sequence.

## Revendications

1. Procédé de reconnaissance vocale de phrases formées par plusieurs mots d'un vocabulaire donné, selon lequel une quantité limitée de phrases autorisées est prédéterminée, les phrases autorisées possédant une syntaxe, et les mots du vocabulaire donné possédant des positions syntaxiques dans les phrases autorisées, et selon lequel
- on utilise un modèle vocal N-gram, dans lequel la syntaxe des phrases autorisées est intégrée, et dans laquelle des mots, qui apparaissent à plusieurs reprises dans différentes positions syntaxiques dans les phrases autorisées, sont différenciés les uns des autres par l'indexation des mots dans le modèle vocal, l'indexation s'effectuant avec les limitations valables pour la position respective, et
- pendant le processus de reconnaissance en cours, seule est contrôlée la concordance d'un signal vocal actuel avec les suites de mots N-gram autorisés, qui sont nets grâce à la prise en compte des limitations syntaxiques, au moyen de l'indexation des mots.

2. Procédé selon la revendication 1, **caractérisé par** un processus de reconnaissance HMM.

3. Procédé selon la revendication 1 ou 2, **caractérisé en ce qu'**un modèle bigram est prédéterminé en tant que modèle vocal.

4. Procédé selon l'une des revendications 1 à 3, **caractérisé en ce qu'**aux exemplaires d'un mot, qui sont prédéterminés plusieurs fois dans le modèle vocal, est affectée la même entrée dans un lexique de prononciation, qui est associé de façon nette, au moyen d'une sélection de noeuds de fin de mots, à un de la pluralité d'exemplaires.

5. Procédé selon l'une des revendications 1 à 4, **caractérisé en ce que** des valeurs de vraisemblance sont affectées aux suites de mots admissibles contrôlées lors du processus de reconnaissance, et ces valeurs de vraisemblance sont comparées à une valeur de seuil.

6. Procédé selon la revendication 5, **caractérisé en ce qu'**on détermine, comme valeur de vraisemblance, la vraisemblance globale de suites de mots, normalisée sur la longueur actuelle des suites de mots.
